# EUROPEAN PATENT APPLICATION

(11) **EP 1 544 861 A1**
(43) Date of publication of application: **22.06.2005**
(21) Application number: 04029563.6
(22) Date of filing: 14.12.2004
(51) Int. Cl.: G11B 27/10, G11B 27/32, G11B 27/34, G11B 27/28

(54) **Apparatus, method and program for reproducing information, and information recording medium**

(30) Priority: 16.12.2003 JP 2003417618
(71) Applicant: Pioneer Corporation, Tokyo-to (JP)
(72) Inventor: Furuta, Hirotaka, 4-chome Tokorozawa-shi Saitama-ken (JP)
(74) Representative: Reinhard - Skuhra - Weise & Partner GbR

(57) **Abstract**

A reproducing information apparatus includes a first display control device, a selection device, a second display control device and a representative image display control device. The first display control device displays representative images previously set for respective reproduction informations, as being indicative of representatives of contents of the reproduction informations. The selection device enables a reproduction information of the reproduction informations to be selected based on the representative images displayed. The second display control device reproduces, when the reproduction information is selected through the selection device, the reproduction information selected to display it inplace of a representative image corresponding to the reproduction information selected. The representative image display control device displays again, when selection of the reproduction information is released through the selection device, the representative image corresponding to the reproduction information, in place of the reproduction information as displayed.

## Description

### BACKGROUND OF THE INVENTION

### 1. Field of the Invention

The present invention relates generally to an apparatus, method and program for reproducing information, and an information recording medium, and more particularly to the apparatus and method for displaying representative images that are indicative of representatives of contents of reproduction informations, (which will also be hereinafter referred to as the "thumbnail images") , permitting selection of a reproduction information based on the representative images as displayed and reproducing same, the program for such reproduction of the information, and the information recording medium in which the above-mentioned information reproduction program is recorded.

### 2. Related Art

There has recently been put into practical use a recorder, which is provided with both of a large capacity hard disc serving in the form of a magnetic disc and a DVD (Digital Versatile Disc) in the form of an optical disc, and enables a broadcast program received in the form of broadcast radio waves to be recorded.

The hard disc of the recorder, in which the broadcast program as received can be recorded temporarily, has a large capacity, thus enabling a plurality of broadcast programs to be stored/recorded. The broadcast program thus stored/recorded will be hereinafter referred to as the "titles".

Concerning a method of selecting effectively, when reproducing one of a plurality of broadcast programs recorded in a hard disc, a broadcast program to be reproduced, there has been a method of displaying an at-a-glance visual layout of thumbnail images, which were previously set for the respective broadcast programs, (hereinafter referred to as the "original thumbnail images"), and selecting one of the thumbnail images in the at-a-glance layout, which corresponds to the broadcast program to be reproduced, thus making it possible to reproduce the broadcast program corresponding to the selected thumbnail image from the hard disc, as described in Japanese Patent Provisional Publication No. H11-215472, FIG. 5, and Japanese Patent Provisional Publication No. 2000-353375, FIGS. 6, 9 and 12.

According to the conventional method of selecting the broadcast program utilizing the at-a-glance visual layout of the thumbnail images, when one of the thumbnail images is selected from the at-a-glance visual layout of the thumbnail images, the broadcast program corresponding to the selected thumbnail image is reproduced for display in an area in which the selected thumbnail image had been displayed, while displaying the other thumbnail images. Such a structure enables a user to confirm actually the contents of the selected broadcast program, while associating the contents of the other broadcast programs based on the other thumbnail images that are indicative of representatives of these contents, thus providing the user with advantageous effects in selection of the broadcast programs.

In the above-mentioned conventional method of selecting the broadcast program, the other thumbnail image is selected in a state in which the broadcast program is actually reproduced for display in the area in which the corresponding thumbnail had been displayed, the reproduction for display of the broadcast program is suspended to hold the image as displayed at the time when the other thumbnail image is selected, and the other broadcast program corresponding to the other thumbnail image is reproduced for display in an area in which the other thumbnail image had been displayed.

However, in the above-mentioned conventional method of selecting the broadcast program utilizing the thumbnail images, the reproduction for display of the broadcast program is suspended to hold the image as displayed at the time when the other thumbnail image is selected, or selection of the thumbnail image causes a change in hierarchical level of selection. When a user makes an attempt to select the previous broadcast program after selection of the other thumbnail image, there may be a case where the user cannot grasp intuitively the contents of the previous broadcast program to select it, thus causing a problem.

Such a problem is caused by the fact that the reproduction for display of the broadcast program is suspended to hold the image as displayed at the time when the other thumbnail image is selected, in a manner as described above, with the result that the original thumbnail image is not displayed for the title, and the image as displayed at the time when the other thumbnail image is selected is kept appearing as the thumbnail image, thus making it difficult for the user to intuitively grasp the contents of the previous broadcast program.

When the plurality of thumbnail images are selected one after another, images that are displayed so as to correspond to the respective broadcast programs, but different from the respective original thumbnail images for the titles may further change, thus making it more difficult for the user to intuitively grasp the contents of the previous broadcast program.

### SUMMARY OF THE INVENTION

An object of the present invention, which was made in view of the above-mentioned problems, is therefore to provide an apparatus and method for reproducing information, which permit execution of an easy and rapid selection of a broadcast program for which a thumbnail image is previously set, a program for such reproduction of the information utilizing such a selection, and an information recording medium in which the above-mentioned information reproduction program is recorded.

In order to attain the aforementioned object, an apparatus for reproducing information according to one of aspects of the present invention is characterized by comprising:
a first display control device that displays representative images, which are previously set for respective reproduction informations, as being indicative of representatives of contents of the reproduction informations to be reproduced;
a selection device that enables a reproduction information to be reproduced of the reproduction informations to be selected based on the representative images displayed;
a second display control device that reproduces, when the reproduction information is selected through the selection device, the reproduction information as selected to display same in place of a representative image corresponding to the reproduction information as selected; and
a representative image display control device that displays again, when selection of the reproduction information is released through the selection device during reproduction/display of the reproduction information, the representative image corresponding to the reproduction information, in place of the reproduction information as displayed.

According to the other aspect of the present invention, the first display control device may display an at-a-glance visual layout of the representative images corresponding to the respective reproduction informations; and the second display control device may display, when reproducing the reproduction information to display same, the reproduction information in an area in which the representative image corresponding to the reproduction information had been displayed.

According to the other aspect of the present invention, the reproduction informationmay include reproduction images, which are dynamic images; and the representative images may be representative static images, which are previously set as being indicative of representatives of contents of the dynamic images.

According to the other aspect of the present invention, each of the representative static images may be a static image, which forms a part of each of the dynamic images.

In order to attain the aforementioned object, a method for reproducing information according to the other aspect of the present invention is characterized by comprising:
a first display control step for displaying representative images, which are previously set for respective reproduction informations, as being indicative of representatives of contents of the reproduction informations to be reproduced;
a selection step for enabling a reproduction information to be reproduced of the reproduction informations to be selected based on the representative images displayed;
a second display control step for reproducing, when the reproduction information is selected through the selection device (163), the reproduction information as selected to display same in place of a representative image corresponding to the reproduction information as selected; and
a representative image display control step for displaying again, when selection of the reproduction information is released through the selection device (163) during reproduction/display of the reproduction information, the representative image corresponding to the reproduction information, in place of the reproduction information as displayed.

In order to attain the aforementioned object, an information reproduction program according to the other aspect of the present invention, causes a computer, which is included in an information reproduction apparatus, to function as:
a first display control device that displays representative images, which are previously set for respective reproduction informations, as being indicative of representatives of contents of the reproduction informations to be reproduced;
a selection device that enables a reproduction information to be reproduced of the reproduction informations to be selected based on the representative images displayed;
a second display control device that reproduces, when the reproduction information is selected through the selection device, the reproduction information as selected to display same in place of a representative image corresponding to the reproduction information as selected; and
a representative image display control device that displays again, when selection of the reproduction information is released through the selection device during reproduction/display of the reproduction information, the representative image corresponding to the reproduction information, in place of the reproduction information as displayed.

In order to attain the aforementioned object, an information recording medium according to the other aspect of the present invention includes the above-mentioned information reproduction program is recorded so as to be readable through the computer.

### BRIEF DESCRIPTION OF THE DRAWINGS

FIG. 1 is a block diagram showing a schematic structure of a recorder according to an embodiment of the present invention;
FIG. 2 is a flowchart showing a selection processing according to the embodiment of the present invention; and
FIGS. 3A-3C are views showing an example of a thumbnail selection mode utilized in the selection processing according to the embodiment of the present invention.

### DESCRIPTION OF THE PREFERRED EMBODIMENTS

Now, a preferred embodiment of the present invention will be described in detail below with reference to the accompanying drawings. The embodiment of the present invention describes a recorder serving as an information reproduction apparatus to which the present invention is applied. The recorder records a broadcast program in at least one of a hard disc (hereinafter referred to as the "HD") and a DVD and reproduces such a program. The above-mentioned broadcast program will be hereinafter referred to as the "title" in the embodiment described below. More specifically, the "title" means a set of broadcast programs, which are recorded successively.

### [I] General Structure and Operation of Recorder

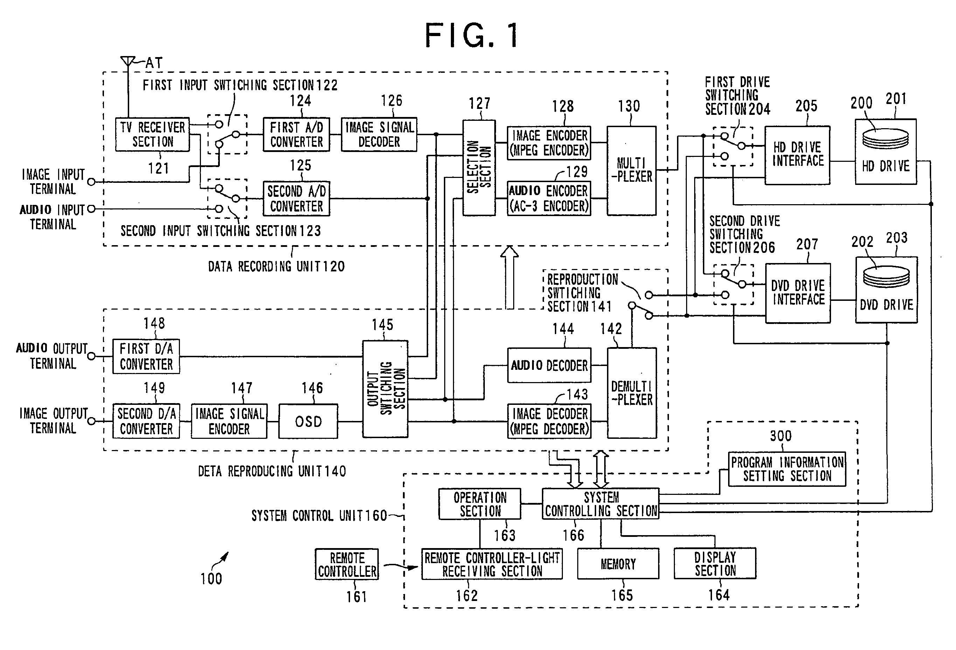

First, a general structure and operation of the recorder will be described with reference to FIG. 1. FIG. 1 is a block diagram showing the schematic structure of the recorder according to the embodiment of the present invention.

The recorder 100 of the embodiment of the present invention includes a HD drive 201, a DVD drive 203, a data recording unit 120, a data reproducing unit 140 and a system control unit 160, as shown in FIG. 1. The HD drive 201 performs the reading and writing of data corresponding to the contents from and to a HD 200 serving as a recording medium in which these contents are recorded. The DVD drive 203 performs the reading and writing of data corresponding to the contents from and to a DVD 202 in which these contents are recorded. The data recording unit 120 receives image data and audio data as inputted therein, which correspond to the contents and records the image data and the audio data in the HD 200 or the DVD 202. The data reproducing unit 140 reads the title, which has already been recorded in the HD 200 or the DVD 202, therefrom to reproduce the respective data. The system control unit 160 controls the data recording unit 120 and the data reproducing unit 140.

A first drive switching section 204, which carries out a switching operation between an output from the DVD drive 203 and an output from the data recording unit 120, and a HD drive interface 205 based on ATAPI (AT Attachment Packet Interface) or the other standard are connected to the HD drive 201. The first drive switching section 204 carries out a switching operation between an input and an output under control of a system controlling section 166 described later.

The HD drive 201 reads a program stream having the image data and the audio data, which are previously recorded in the HD 200 and constitute the respective title, from the HD 200 and outputs the program stream to the data reproducing unit 140 through the HD drive interface 105. In addition, the HD drive 201 records a program stream, which has been generated by the data recording unit 120 and inputted through the HD drive interface 205 to the HD drive 201, in the HD 200.

A second drive switching section 206, which carries out a switching operation between an output from the HD drive 201 and an output from the data recording unit 120, and a DVD drive interface 207 based on ATAPI or the other standard are connected to the DVD drive 203. The second drive switching section 206 carries out a switching operation between an input and an output under control of the system controlling section 166 described later, in the similar manner to the first drive switching section 204.

The DVD drive 203 reads a program stream having the image data and the audio data, which are previously recorded in the DVD 202 and constitute the respective title, from the DVD 202 and outputs the program stream to the data reproducing unit 140 through the DVD drive interface 207, in the similar manner to the HD drive 201. In addition, the DVD drive 203 records a program stream, which has been generated by the data recording unit 120 and inputted through the DVD drive interface 207 to the HD drive 201, in the DVD 202.

Now, description will be given below of a concrete structure and operation of the data recording unit 120 of the recorder 100 according to the embodiment of the present invention.

The data recording unit 120 of the recorder 100 according to the embodiment includes a TV receiver section 121 for receiving broadcast waves, which are transmitted from a broadcast station, through an antenna AT; a first input switching section 122 for carrying out a switching operation between an analog image signal externally inputted through an image input terminal and an output from the TV receiver section 121; a second input switching section 123 for carrying out a switching operation between an analog audio signal externally inputted through an audio input terminal and the output fromthe TV receiver section 121; a first analog/digital (hereinafter referred to as "AD") converter 124 for converting a TV image signal as received or inputted, which corresponds to the title, into a digital signal; a second AD converter 125 for converting the audio signal as received or inputted, which corresponds to the title, into a digital signal; an image signal decoder 126 for decoding the TV image signal, which has been converted into the digital signal, into an image signal; a selection section 127 for selecting the image signal and the audio signal to be encoded; an image encoder 128 for converting the image signal, which is selected by the selection section 127, into an MPEG (Motion Picture Expert Group) format; an audio encoder 129 for converting the audio signal, which is selected by the selection section 127, into an AC (Audio Coding)-3 format; and a multiplexer 130 for generating a program stream from the image data in the MPEG format and the audio data in the AC-3 format.

The TV receiver section 121 receives the broadcast waves, e.g., RF signals such as VHF or BS signals, which have been transmitted from the broadcast station, and converts the signal waves, which have been received in tune with a receiving band selected by a user, into IF (intermediate frequency) signals. In addition, the TV receiver section 121 demodulates these signals into the TV image signal and the audio signal and outputs them to the first input switching section 122.

The first input switching section 122 to which the TV image signal outputted from the TV receiver section 121 and the analog image signal externally inputted through the image input terminal are inputted, switches selectively these inputted TV image signals and outputs the image signal to the first A/D converter 124, under control of the system control unit 160.

The second input switching section 123 to which the audio signal outputted from the TV receiver section 121 and the analog audio signal externally inputted through the audio input terminal are inputted, switches selectively these inputted audio signals and outputs the audio signal to the second A/D converter 125, under control of the system control unit 160.

The first A/D converter 124 to which the analog signals selected by the first input switching section 122, i.e., the TV image signals are inputted, converts the inputted analog signals, i.e., the TV image signals into the digital signals and outputs these digital signals to the image signal decoder 126.

Then, the TV image signals converted into the digital signals are inputted to the image signal decoder 126. The image signal decoder 126 decodes the inputted TV image signals to convert them into the normal image signals, e. g. , the image signals based on the NTSC (National Television System Committee) system. The image signal decoder 126 outputs the image signals after conversion to the selection section 127.

The second A/D converter 125 to which the analog signals selected by the second input switching section 123, i.e., the audio signals are inputted, converts the inputted analog signals, i.e., the audio signals into the digital signals and outputs these digital signals to the selection section 127.

The image signals and the audio signals, which are outputted from the image signal decoder 126 and the second A/D converter 125, respectively, as well as the image signals and the audio signals, which are outputted, when a so-called dubbing processing from the HD 200 to the DVD 202, from the HD drive 201 or the DVD drive 203 and then decoded, are inputted to the selection section 127. The selection section 127 selects any one of the image signals and the audio signals as inputted, under the control of the system control unit 160, and outputs the selected image and audio signals to the image and audio encoders 128 and 129, respectively.

Accordingly, the image signals selected by the selection section 127 are inputted to the image encoder 128. The image encoder 128 converts the inputted image signals into the image data based on the MPEG format and outputs the image data after conversion to the multiplexer 130.

On the other hand, the audio signals selected by the selection section 127 are inputted to the audio encoder 129. The audio encoder 129 converts the inputted audio signals into the audio data based on the AC-3 format and outputs the audio data after conversion to the multiplexer 130.

The image data, which are converted in the MPEG format, and the audio data, which are converted in the AC-3 format are inputted to the multiplexer 130. The multiplexer 130 generates a program stream based on the inputted image data and audio data, and output the thus generated program stream to the first drive switching section 204 and the second drive switching section 206.

Now, description will be given below of a concrete structure and operation of the data reproducing unit 140 of the recorder 100 according to the embodiment of the present invention.

The data reproducing unit 140 of the recorder 100 according to the embodiment includes a reproduction switching section 141, a demultiplexer 142, an image decoder 143 and an audio decoder 144, a output switching section 145, an OSD (On Screen Display) 146, an image signal encoder 147, a second digital/analog (hereinafter referred to as "D/A") converter 149, and a first D/A converter 148. The reproduction switching section 141 selects any one of the reproduction output from the HD 200 and the reproduction output from the DVD 202. The demultiplexer 142 demultiplexes the audio data and the image data, which have been outputted from the HD drive 201 or the DVD drive 203, from the program stream. The image and audio decoders 143 and 144 decode the image and audio signals demultiplexed by the demultiplexer 142, respectively. The output switching section 145 performs a switching operation between the image and audio signals, which are outputted from the image decoder 143 and the audio decoder 144, respectively, and the image and audio signals, which are outputted from the TV receiver section 121. The OSD 146 generates the above-described thumbnail images, which are to be outputted to a monitor as described later. The image signal encoder 147 converts the image signals into TV signals. The second D/A converter 14 9 converts the image signals, which are digital signals, into the analog signals. The first D/A converter 148 converts the audio signals, which are digital signals, into the analog signals. The image signals and the audio signals, which have been converted into the analog signals, are outputted externally through the image output terminal and the audio output terminal, respectively.

The program stream, which has been outputted from the HD drive 201 through the HD drive interface 205, and the program stream, which has been outputted from the DVD drive 203 through the DVD drive interface 207, are inputted to the reproduction switching section 141. The reproduction switching section 141 selects any one of the program streams outputted from these drives 201 and 203, under the control of the system controlling section 166, and outputs the selected program stream to the demultiplexer 142.

The demultiplexer 142, to which the program stream selected by the reproduction switching section 141 has been inputted, demultiplexes the image data ant the audio data from the inputted program stream, and outputs the demultiplexed image data and audio data to the image and audio decoders 143 and 144, respectively.

Especially, the demultiplexer 143 demultiplexes the image data in the MPEG format and the audio data in the AC-3 format from the program stream.

The image data in the MPEG format demultiplexed from the program stream are inputted to the image decoder 143. The image decoder 143 decodes the inputted image data in the MPEG format to convert them into the image signals, and outputs the thus decoded image signals, which are digital signals, to the output switching section 145.

On the other hand, the audio data in the AC-3 format demultiplexed from the program stream are inputted to the audio decoder 144. The audio decoder 144 decodes the inputted audio data in the AC-3 format to convert them into the audio signals, and outputs the thus decoded audio signals, which are digital signals, to the output switching section 145.

The image signals and audio signals, which are digital signals and have been outputted from the data recording unit 120, and the image signals and audio signals, which have been decoded by the image and audio decoders 143 and 144, respectively, are inputted to the output switching section 145. The output switching section 145 performs a switching operation between the decoded image and audio signals and the image and audio signals outputted from the data recording unit 120, and outputs the image signals to the OSD 146 and the audio signals to the first D/A converter 148.

In the embodiment of the present invention, the image signals outputted from the image signal decoder 126 and the audio signals outputted from the second A/D converter 125.

The image signals, which have been subjected to the switching operation by the output switching section 145, are inputted to the OSD 146. The OSD 146 superimposes required character information on the inputted image signals and outputs the image signals on which the character information has been superimposed to the image signal encoder 147.

In the embodiment of the present invention, when the above-described reproduction processing is carried out, the OSD 146 generates the thumbnail static image information, which is indicative of the representative of the contents of the title to be reproduced, and outputs the thus generated thumbnail static image information to the image signal encoder 147, in accordance with the instructions from the system control unit 160. The thumbnail static image information is to display the thumbnail image (i.e. , the single static image of which the dynamic image included in the title is partially constituted), which has been previously designated for the respective title by a user, automatically designated for the respective title by the system control unit 160 or previously designated for the respective title in the HD 200 or DVD 202. An address information, which is indicative of a recording position, in the title, of the static image information corresponding to the thumbnail static image information for the respective title (i.e., the recording address on the HD 200 or DVD 202) is previously recorded for the respective thumbnail image as designated, on the HD 200 or DVD 202. When the thumbnail image is displayed, the OSD 146 detects the static image information, which is to be the thumbnail static image information, from the HD 200 or DVD 202, based on the above-mentioned address information.

When the thumbnail image as displayed is selected, the OSD 146 according to the embodiment of the present invention displays the title, the contents of which are represented by the selected thumbnail image, in the form of actual dynamic image in an area in which the thumbnail image had been displayed. In this case, the image information for such display is read from the HD 200 or DVD 202 each time.

The image signal encoder 147 converts the image signals into the TV image format in order to display the image corresponding to the thumbnail static image information on an external monitor, and output the image signals after conversion in the TV format to the second D/A converter 149.

The image signals, which have been converted into the TV format in the form of digital signals, are inputted to the second D/A converter 149. The second D/A converter 149 converts the inputted digital signals, i . e . , the image signals into the analog signals, and outputs externally the image signals converted into the analog signals through the image output terminal.

The switching operation by the output switching section 145 causes the digital audio signals to be inputted to the first D/A converter 148. The first D/A converter 148 converts the inputted digital audio signals into the analog signals, and outputs externally the audio signals converted into the analog signals through the audio output terminal.

Now, description will be given below of a concrete structure and operation of the system control unit 160 of the recorder 100 according to the embodiment of the present invention, with reference to FIG. 1.

The system control unit 160 of the recorder 100 according to the embodiment includes a remote controller-light receiving section 162, an operation section 163, a display section 164, a system controlling section 166, a memory 165 and a program information setting section 300. The remote controller-light receiving section 162 receives light beam, which is emitted from a remote controller 161 for controlling the recorder 100 from a distant point. The operation section 163 serves, as the selection device through which a user can set desired operation. The display section 164 displays information desired by the user about confirmation of his/her operation through the remote controller 161 or the operation section 163. The system controller section 166, which controls the system in its entirety and serves as the first display control device, the second display control device and the representative image display control device, controls, when carrying out the dubbing operation, the OSD 146 to generate the image information required for the dubbing processing (hereinafter referred to as the "dubbing information"), in order to set the dubbing information based on the information through key entry (hereinafter referred to as the "key entry information" ) , which is inputted to the remote controller 161 or operation section 163 and display the information on a not-shown monitor. The memory 165 stores programs required for various kinds of operations.

The remote controller 161 includes a plurality of keys such as various kinds of confirmation buttons and numeric keys, and a cursor-control key(s) provided in the center of the remote controller 161 to move a cursor upward, downward, rightward or leftward.

The remote controller-light receiving section 162 receives light beam such infrared rays emitted fromthe remoter controller 161, converts the received light beam into a predetermined signal and outputs the same to the operation section 163.

The operation section 163 includes a plurality of keys such as various kinds of confirmation buttons and numeric keys, and a cursor-control key (s) for moving a cursor upward, downward, rightward or leftward, in the similar manner to the remote controller 161.

The operation section 163 outputs a predetermined signal, which is outputted based on the key operation or from the remote controller-light receiving section 162, to the system controlling section 166.

The display section 164, which includes a light-emitting portion provided with a plurality of light-emitting elements such as a liquid crystal, displays information desired by a user on confirmation of operation by the remote controller 161 or the operation section 163.

The program information setting section 300 automatically records a broadcast program at a programmed time in the HD 200 or DVD 202. In addition, the program information setting section 300, sets, when the setting is made to dub the information recorded in the HD 200 into the DVD 202, dubbing information required for the dubbing operation based on the key entry information, which is inputted to the remote controller 161 or the operation section 163.

The system controlling section 166, which is composed basically of a central processing unit (CPU), includes input and output ports such as a key input port and an output port to the display section 164. The system controlling section 166 has control over general functions of respective processing of reproduction/record in the HD 200 or reproduction/record in the DVD 202.

Especially, the system controlling section 166 outputs the image information corresponding to the thumbnail image, which has been generated by the above-mentioned OSD 14 6 based on the input operation through the operation keys in the remoter controller 161 or the operation section 163, to an external equipment through the image signal encoder 147 and the second D/A converter 149.

### [II] Embodiment of Thumbnail Image Display Processing

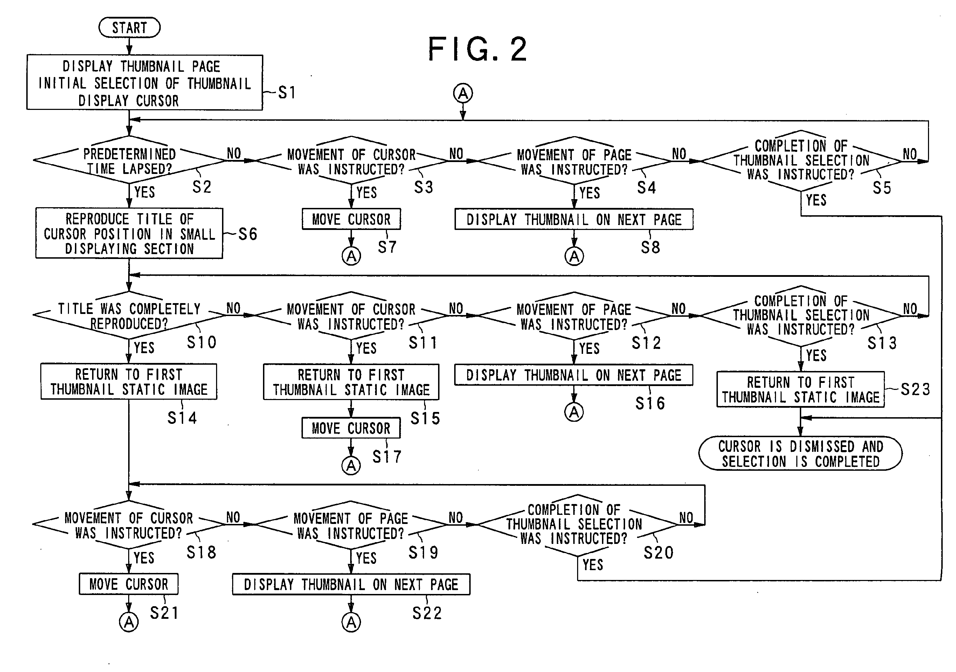

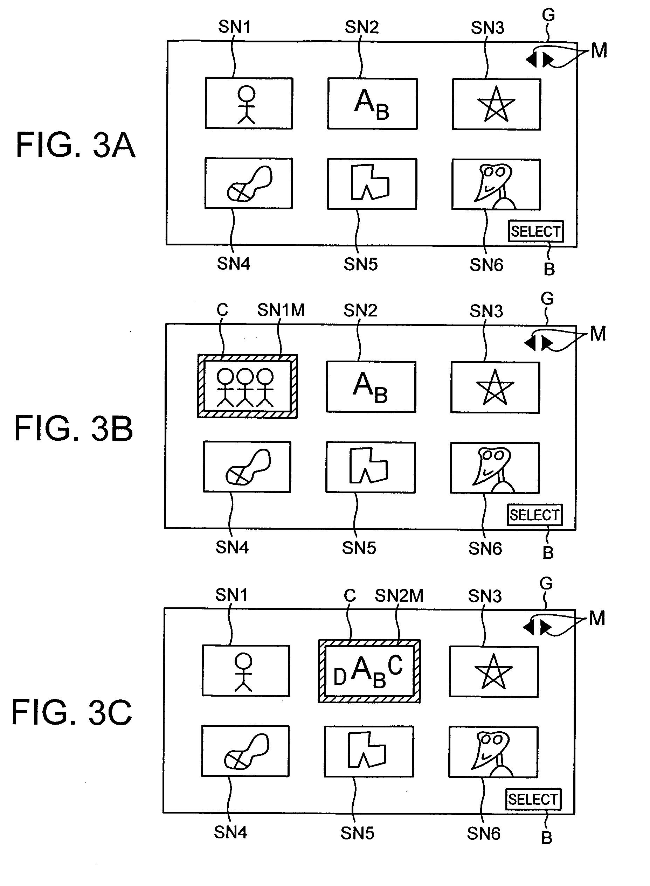

Now, a processing of reproducing the title accompanied with a display processing utilizing the thumbnail selection screen including the plurality of thumbnail images in accordance with the embodiment of the present invention will be described with reference to FIGS. 2 and 3. FIG. 2 is a flowchart showing the processing of reproducing the title according to the embodiment of the present invention and FIGS. 3A-3C are views showing an example of a thumbnail selection screen utilized in the display processing of the thumbnail selection screen according to the embodiment of the present invention.

When the reproduction processing according to the embodiment of the present invention starts as shown in FIG. 2, the thumbnail selection screen on a basis of which the title to be reproduced is to be selected, is generated in accordance with the above-described functions of the OSD 146 and the thus generated screen is displayed on a not-shown display (Step S1: the thumbnail page display).

The thumbnail selection screen displayed in the above-mentioned step S1 will be described in detail with reference to FIG. 3A.

The thumbnail selection screen "G" according to the present invention (which will be referred also to the "page") at least includes thumbnail images SN1 to SN6, an enter key "B" and page movement keys "M". The thumbnail images SN1 to SN6 correspond to the respective tittles, which are to be reproduced, and namely are recorded in the HD 200 or the DVD 202. The enter key "B" is to be used, when any one of the thumbnail images SN1 to SN6 is selected, to cause the selection to be confirmed, with the result that the system enters the actual reproduction mode of the title. The page movement key "M" is to be used to move from the above-mentioned thumbnail selection screen "G" to the other thumbnail selection screen "G", which includes thumbnail images corresponding to the different titles from the thumbnail selection screen "G" as shown in FIG. 3A.

Each of the thumbnail images SN1 to SN6 is a static image that partially constitutes the respective title, which is represented by the corresponding thumbnail image. When any one of the thumbnail images SN1 to SN6 is selected, the title that is represented by the selected thumbnail image SN is actually displayed in the form of dynamic image in an area in which the selected thumbnail image SN had been displayed, as described in detail later.

When the thumbnail selection screen "G" is displayed, a cursor "C" is automatically shitted to the uppermost left position on the displayed thumbnail selection screen "G" (Step S1: Display of the cursor) so as to surround the area in which the corresponding thumbnail image SN1 is placed, as shown in FIG. 3B, thus indicating a state in which the thumbnail image SN1 is to be selected (Step S1: Initial selection of the thumbnail).

Then, it is judged as whether or not a predetermined period of time (of e.g. one second) has lapsed at the state in which the thumbnail image SN1 is selected (Step S2) . When the above-mentioned time has lapsed (YES in Step S2), the dynamic image SN1M is displayed in the form of the title, which is represented by the selected thumbnail image SN1, in the area in which the selected thumbnail image SN1 had been displayed (Step S6). The other thumbnail images SN2 to SN6 are displayed as they are in the thumbnail selection screen "G".

In case where it is judged in Step S2 that the above-mentioned time has not lapsed (No in Step S2), it is judged as whether or not an operation of moving the cursor "C" has been carried out through the remote controller 161 or the operation section 163 (Step S3). In case where the operation of moving the cursor "C" has been carried out (YES in Step S3), the cursor "C" is moved to a position of any one of the other thumbnail images SN2 to SN6 in accordance with the above-mentioned operation (Step S7), and then the system returns to the above-mentioned Step S2 and the above-described operations are repeated.

In case where it is judged in Step S3 that no operation of moving the cursor "C" has been carried out (NO in Step S3), it is then judged as whether or not an operation of moving to the other page (i.e. , the other thumbnail selection screen "G") has been carried out through an operation of the page movement key "M" with the use of the remote controller 161 and the operation section 163 (Step S4). When it is judged in Step S4 that the operation of moving to the other page has been carried out (YES in Step S4), the next thumbnail selection screen "G" is displayed in accordance with the operation (Step S8), and then the system returns to the above-mentioned Step S2 and the above-described operations are repeated.

When it is judged in Step S4 that no operation of moving to the other page has been carried out (NO in Step S4), it is then judged as whether or not an operation of exiting from the selection by the cursor in the thumbnail selection screen "G" has been carried out through the remote controller 161 or the operation section 163 (Step S5). In case where it is judged that the operation of exiting from the selection by the cursor in the thumbnail selection screen "G" has been carried out (YES in Step S5), the display operation utilizing the cursor as currently displayed is terminated, and then the system enters the other processing. In case where it is judged in Step S5 that no operation of exiting from the selection by the cursor in the thumbnail selection screen "G" has been carried out (NO in Step S5) , and then the system returns to the above-mentioned Step S2 and the above-described operations are repeated.

Then, when the dynamic image SN1M corresponding to the original thumbnail image SN1 is for example displayed (Step S6) , it is confirmed as whether or not the title corresponding to the thumbnail image SN1 has been reproduced completely in the above-mentioned area (Step S10). In case where the reproduction has not as yet been completed (NO in Step S10) , it is judged as whether or not an operation of moving the cursor "C" from the area for the thumbnail image SN1, in which the dynamic image SN1M is displayed, has been carried out by operating the page movement key "M" through the remote controller 161 or the operation section 163 (Step S11) . When it is judged that the operation of moving the cursor "C" is carried out (YES in Step S11), the display of the dynamic image SN1M is terminated, and then the original thumbnail image SN1 is displayed again in the area in which the dynamic image SN1M had been displayed (Step S15). In addition, the cursor "C" is moved to any one of positions of the other thumbnail images SN2 to SN6 in accordance with the operation in Step S11 (Step S17) and then the system returns to the above-mentioned Step S2 and the above-described operations are repeated.

After the system returns to the above-mentioned step S2, the processing of Steps S1 to S8 is carried out. As a result, the original thumbnail image SN1 is displayed in the area in which the dynamic image SN1M had been displayed, and the dynamic image SN2M is displayed in the form of title, which is represented by the original thumbnail image SN2, in the area in which the original thumbnail image SN2 had been displayed, as shown in FIG. 3C (Step S6).

On the contrary, in case where it is judged in Step S11 that no operation of moving the cursor "C" has been carried out (NO in Step S11), it is then judged as whether or not an operation of moving to the other page has been carried out through the remote controller 161 and the operation section 163 (Step S12). When the operation of moving the cursor "C" to the other page has been carried out (YES in Step S12), the next thumbnail selection screen "G" is displayed in accordance with the operation (Step S16) , and then the system returns to the above-mentioned Step S2 and the above-described operations are repeated.

When it is judged in Step S12 that no operation of moving to the other page has been carried out (NO in Step S12), it is then judged as whether or not an operation of exiting from the selection by the cursor in the thumbnail selection screen "G" has been carried out through the remote controller 161 or the operation section 163 (Step S13). In case where it is judged that the operation of exiting from the selection by the cursor in the thumbnail selection screen "G" has been carried out (YES in Step S13), the display of the dynamic image SN1M is terminated, then the original thumbnail image SN1 is displayed again in the area in which the dynamic image SN1M had been displayed (Step S23), and then the display operation utilizing the cursor as currently displayed is terminated, and then the system enters the other processing. In case where it is judged in Step S13 that no operation of exiting from the selection by the cursor in the thumbnail selection screen "G" has been carried out (NO in Step S13), and then the system returns to the above-mentioned Step S10 and the above-described operations based on Step S10 and the subsequent steps are repeated.

In case where it is judged in the above-mentioned Step S10 that the title (i.e., the dynamic image SN1M) corresponding to the thumbnail image SN1 has been reproduced completely (YES in Step S10), the original thumbnail image SN1 is displayed in the area in which the dynamic image SN1M had been displayed (Step S14) . In addition, it is judges as whether or not an operation of moving the cursor "C" from the area for the thumbnail image SN1, in which the dynamic image SN1M is displayed, has been carried out through the remote controller 161 or the operation section 163 (Step S18). When it is judged that the operation of moving the cursor "C" is carried out (YES in Step S18), the cursor "C" is moved to any one of positions of the other thumbnail images SN2 to SN6 in accordance with the operation in Step S18 (Step S21) and then the system returns to the above-mentioned Step S2 and the above-described operations are repeated.

On the contrary, in case where it is judged in Step S18 that no operation of moving the cursor "C" has been carried out (NO in Step S18), it is then judged as whether or not an operation of moving to the other page has been carried out by operating the page movement key "M" through the remote controller 161 and the operation section 163 (Step S19). When the operation of moving the cursor "C" to the other page has been carried out (YES in Step S19), the next thumbnail selection screen "G" is displayed in accordance with the operation (Step S22), and then the system returns to the above-mentioned Step S2 and the above-described operations are repeated.

When it is judged in Step S19 that no operation of moving to the other page has been carried out (NO in Step S19), it is then judged as whether or not an operation of exiting from the selection by the cursor in the thumbnail selection screen "G" has been carried out through the remote controller 161 or the operation section 163 (Step S20). In case where it is judged that the operation of exiting from the selection by the cursor in the thumbnail selection screen "G" has been carried out (YES in Step S20) , the display operation utilizing the cursor as currently displayed is terminated, and then the system enters the other processing. In case where it is judged in Step S21 that no operation of exiting from the selection by the cursor in the thumbnail selection screen "G" has been carried out (NO in Step S20) , and then the system returns to the above-mentioned Step S18 and the above-described operations are repeated.

According to the selection processing of the title as described above, operating the enter key "B" through the remote controller or the operation section 163, when the cursor "C" is placed in any one of positions of the thumbnail images SN enables the title, which is represented by the thumbnail image SN as selected by the cursor "C", to be detected from the HD 200 or the DVD 202 and reproduced for display.

According to the selection processing of the title utilizing the thumbnail selection screen "G" in the recorder 100 of the embodiment of the present invention, when, during reproduction/display of a certain dynamic image SN1M, the reproduction of the other title is selected, or a change is made in hierarchical level of selection of title (namely, the selection of the title as currently displayed is released) , the original thumbnail image SN1 is displayed again in the thumbnail selection screen "G" in place of the dynamic image SN1M as displayed. As a result, even when the title, which is represented by the original thumbnail image SN1, is selected again, it is possible for a user to recognize easily and rapidly the contents of the selected title.

In addition, even when any one of the thumbnail images SN displayed at an at-a-glance visual layout is selected to reproduce the corresponding dynamic image SN1M, the contents of the other title can be easily and rapidly recognized through the corresponding thumbnail image SN.

In the present invention, the title is of the dynamic image and the thumbnail image SN is a static image, thus making it possible to display the contents of the respective title through the thumbnail image SN, while selectively displaying the thumbnail image SN and the dynamic image corresponding to the title, which is selected to be reproduced.

The thumbnail image SN is the static image of which the dynamic image of the title is partially constituted, thus providing a further recognizable display of the contents of the title.

In the above-described embodiment of the present invention, when the thumbnail image SN is to be displayed, the static image is detected based on the information indicative of the recording position on the HD 200 or the DVD 202 in which the static images that may be the thumbnail image SN are recorded, and the thumbnail selection screen "G" is generated and displayed. Alternatively, all the static images included in the thumbnail selection screen "G" at the time when it is once displayed, may be detected from the HD 200 or the DVD 202 and temporarily stored in the memory 165. In such a case, when the same thumbnail image SN is to be displayed again, it is possible to display more rapidly the thumbnail selection screen "G" including the above-mentioned thumbnail image SN.

In addition, the program corresponding to the flowchart as shown in FIG. 2 may be recorded in an information recording medium such as a flexible disc, or obtained through a network such as the Internet to be recorded. Reading the program to execute it by a general-purpose computer causes the computer to function as the system controlling section 166 according to the embodiment of the present invention.

## Claims

1. An apparatus for reproducing information, **characterized by** comprising:
a first display control device (166) that displays representative images, which are previously set for respective reproduction informations, as being indicative of representatives of contents of the reproduction informations to be reproduced;
a selection device (163) that enables a reproduction information to be reproduced of the reproduction informations to be selected based on the representative images displayed;
a second display control device (166) that reproduces, when the reproduction information is selected through the selection device (163), the reproduction information as selected to display same in place of a representative image corresponding to the reproduction information as selected; and
a representative image display control device (166) that displays again, when selection of the reproduction information is released through the selection device (163) during reproduction/display of the reproduction information, the representative image corresponding to the reproduction information, in place of the reproduction information as displayed.

2. The apparatus as claimed in Claim 1, **characterized in that**:
the first display control device (166) displays an at-a-glance visual layout of the representative images corresponding to the respective reproduction informations; and
the second display control device (166) displays, when reproducing the reproduction information to display same, the reproduction information in an area in which the representative image corresponding to the reproduction information had been displayed.

3. The apparatus as claimed in Claim 1 or 2, **characterized in that**:
the reproduction information includes reproduction images, which are dynamic images; and
the representative images are representative static images, which are previously set as being indicative of representatives of contents of the dynamic images.

4. The apparatus as claimed in Claim 3, **characterized in that**:
each of the representative static images is a static image, which forms a part of each of the dynamic images.

5. A method for reproducing information, **characterized by** comprising:
a first display control step for displaying representative images, which are previously set for respective reproduction informations, as being indicative of representatives of contents of the reproduction informations to be reproduced;
a selection step for enabling a reproduction information to be reproduced of the reproduction informations to be selected based on the representative images displayed;
a second display control step for reproducing, when the reproduction information is selected through the selection device (163), the reproduction information as selected to display same in place of a representative image corresponding to the reproduction information as selected; and
a representative image display control step for displaying again, when selection of the reproduction information is released through the selection device (163) during reproduction/display of the reproduction information, the representative image corresponding to the reproduction information, in place of the reproduction information as displayed.

6. An information reproduction program, causing a computer, which is included in an information reproduction apparatus, to function as:
a first display control device (166) that displays representative images, which are previously set for respective reproduction informations, as being indicative of representatives of contents of the reproduction informations to be reproduced;
a selection device (163) that enables a reproduction information to be reproduced of the reproduction informations to be selected based on the representative images displayed;
a second display control device (166) that reproduces, when the reproduction information is selected through the selection device (163), the reproduction information as selected to display same in place of a representative image corresponding to the reproduction information as selected; and
a representative image display control device (166) that displays again, when selection of the reproduction information is released through the selection device (163) during reproduction/display of the reproduction information, the representative image corresponding to the reproduction information, in place of the reproduction information as displayed.

7. An information recording medium in which the information reproduction program claimed in Claim 6 is recorded so as to be readable through the computer.
